# EUROPÄISCHE PATENTSCHRIFT

(11) **EP 4 049 512 B1**
(45) Veröffentlichungstag und Bekanntmachung des Hinweises auf die Patenterteilung: **29.11.2023**
(21) Anmeldenummer: 20768596.7
(22) Anmeldetag: 09.09.2020
(51) Int. Cl.: H05B 6/06, A47J 36/32, F24C 7/08

(54) **VERFAHREN ZUM BETRIEB EINES KOCHSYSTEMS SOWIE KOCHFELD UND GARGESCHIRR**
METHOD FOR OPERATING A COOKING SYSTEM, AND HOB AND COOKWARE
PROCÉDÉ PERMETTANT DE FAIRE FONCTIONNER UN SYSTÈME DE CUISSON AINSI QUE PLAQUE DE CUISSON ET USTENSILE DE CUISSON

(30) Priorität: 21.10.2019 DE 102019128303
(43) Veröffentlichungstag der Anmeldung: 31.08.2022
(73) Patentinhaber: Miele & Cie. KG, 33332 Gütersloh (DE)
(72) Erfinder: MÜLLER, Christoph, 32289 Rödinghausen (DE); HÖLSCHER, Britta, 30167 Hannover (DE); LAUKÖTTER, Ina, 33334 Gütersloh (DE); KEUNECKE, Jens, 33615 Bielefeld (DE); DEUTSCHMANN, Till, 33617 Bielefeld (DE); EBKE, Daniel, 33613 Bielefeld (DE)
(86) Internationale Anmeldenummer: PCT/EP2020/075141
(87) Internationale Veröffentlichungsnummer: WO 2021/078439

(56) Entgegenhaltungen:
- EP-A1- 3 225 143
- EP-A1- 3 340 201
- EP-A1- 3 416 457

## Beschreibung

Die Erfindung betrifft ein Verfahren zum Betrieb eines Kochsystems nach Anspruch 1, ein Kochfeld zur Durchführung eines derartigen Verfahrens nach Anspruch 12 sowie ein Gargeschirr zur Durchführung eines derartigen Verfahrens nach Anspruch 13.

Der Trend beim heimischen Kochen geht immer weiter dazu, die Durchführung der Kochprozesse für den Benutzer einfacher, komfortabler und bzw. oder sicherer hinsichtlich des gewünschten Kochergebnisses zu gestalten. Dies kann dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Zu beachten ist in jedem Fall, dass bei einer Kommunikation zwischen Kochgeschirr bzw. Gargeschirr und Kochfeld bzw. Kochstelle oder dergleichen über eine Funkübertragung z.B. mittels Transpondertechnik beachtet werden muss, dass dies eine Fernwirkung darstellen kann, d.h. eine Steuerung und bzw. oder eine Regelung eines Gerätes durch einen Befehl, der außerhalb der Sichtweite eines Gerätes vorgenommen werden kann. Somit kann zwischen den Teilnehmern eine Kommunikation und damit verbunden eine gegenseitige oder zumindest einseitige Beeinflussung stattfinden, auch wenn sich diese nicht in ihrem bestimmungsgemäßen Einsatz befinden. Mit anderen Worten könnte z.B. auch eine Bedienung des Kochfelds bzw. der Kochstelle durch das Kochgeschirr bewirkt werden, obwohl sich das Kochgeschirr gar nicht auf dem Kochfeld bzw. auf der Kochstelle befindet.

Da dies die Sicherheit des Benutzers gefährden kann, sind derartige Fernwirkungen im Haushalt gemäß der Norm DIN EN 60335-2-6 (VDE 0700-1) zu unterbinden.

Die EP 3 416 457 A1 beschreibt ein Verfahren zum Betrieb eines induktiven Kochsystems, wobei das induktive Kochsystem ein Kochfeld mit wenigstens einer ersten Kochstelle und mit wenigstens einer Empfangseinheit und wenigstens ein Kochgeschirr mit wenigstens einem Betätigungselement und mit wenigstens einer Sendeeinheit aufweist, wobei das Kochgeschirr auf der ersten Kochstelle des Kochfelds angeordnet ist, mit wenigstens den Schritten:
- Aussenden eines ersten Signals von der Sendeeinheit des Kochgeschirrs bei Betätigen des Betätigungselements des Kochgeschirrs durch einen Benutzer,
- Empfangen des ersten Signals durch die Empfangseinheit des Kochfelds,
- Auswerten des empfangenen ersten Signals durch das Kochfeld,
- induktives Betreiben wenigstens der ersten Kochstelle des Kochfelds mit einer ersten vorbestimmten Leistung für einen vorbestimmten Zeitraum in Abhängigkeit der Auswertung des empfangenen ersten Signals,
- Aussenden eines zweiten Signals von der Sendeeinheit des Kochgeschirrs bei induktiver Versorgung des Kochgeschirrs durch die erste Kochstelle,
- Empfangen des zweiten Signals durch die Empfangseinheit des Kochfelds, und
- Auswerten des empfangenen zweiten Signals durch das Kochfeld.

Dem Verfahren der EP 3 416 457 A1 liegt dabei der Gedanke zugrunde, dass auf diese Art und Weise durch den Benutzer lediglich eine einmalige Betätigung des Betätigungselements des Kochgeschirrs ausgeführt werden muss, um den gesamten weiteren Ablauf des Verfahrens zu initialisieren. Hierdurch kann das Verfahren bzw. ein entsprechendes Kochgeschirr mit lediglich einem Betätigungselement auskommen, um das erfindungsgemäße Verfahren zu starten und auszuführen.

Dies ist dadurch möglich, dass durch das einmalige Betätigen des Betätigungselements des Kochgeschirrs durch den Benutzer ein Pairing zwischen Kochfeld bzw. dessen Kochstelle und Kochgeschirr ausgelöst wird, welches zu einem Verbinden von Kochstelle und Kochgeschirr führt. Mit anderen Worten wird durch das einmalige Betätigen des Betätigungselements des Kochgeschirrs durch den Benutzer ein Senden eines Signals von der Kochstelle an das Kochgeschirr zurück ausgelöst, welches eine Reaktion seitens des Kochgeschirrs auslöst, die zu einem erfolgreichen Pairing von Kochgeschirr und Kochfeld bzw. Kochstelle führt. Dieses erfolgreiche Pairing kann seitens des Kochfelds als Anlass verwendet werden, z.B. einen automatisierten Gar- bzw. Kochprozess für diese Kochstelle auszuführen. Hierdurch kann dieser automatisierte Gar- bzw. Kochprozess vom Benutzer durch die einmalige Betätigung des Betätigungselements des Kochgeschirrs ausgelöst werden.

Dabei kann das Verfahren dadurch normgerecht unter Vermeidung einer Fernwirkung umgesetzt werden, dass seitens der Kochstelle eine induktive Leistung als ausgesendetes Signal des Pairings verwendet wird, dessen Empfang durch das Kochgeschirr erst dessen Aussenden des zweiten Signals auslöst. Denn dadurch, dass die induktive Leistung der Kochstelle nur bei direktem Kontakt bzw. bei einem maximalen Abstand von ca. 5 cm zwischen der Kochstelle bzw. dessen Spule und dem Kochgeschirr von dem Kochgeschirr aufgenommen werden kann, kann das Pairing lediglich erfolgreich sein, falls diese Rahmenbedingung eingehalten ist. Ansonsten findet kein Pairing statt und der automatisierte Gar- bzw. Kochprozess wird nicht gestartet.

Die EP 3 340 201 A1 beschreibt ein Verfahren zum Betreiben eines Haushaltgeräts, welches insbesondere ein Kochfeld und eine Dunstabzugshaube sein kann, unter Verwendung eines Mobilgeräts, wobei das Verfahren die folgenden Schritte aufweist:
- am Haushaltgerät, Empfangen einer Verfahrensanweisung von dem Mobilgerät; und
- Ansteuern des Haushaltgeräts entsprechend der Verfahrensanweisung, wobei die Verfahrensanweisung ansprechend auf ein durch einen Benutzer am Haushaltgerät ausgelöstes Freigabesignal ausgeführt wird.

Dabei kann das Ansteuern des Freigabesignals unter Verwendung eines manuell bedienbaren Freigabeschalters am Haushaltgerät ausgelöst werden.

Auf diese Art und Weise kann ein Kochprozess eines Kochfelds seitens eines Mobilgerät bzw. einer hierauf ablaufenden App unterstützt und hierzu auch direkte Verfahrensanweisungen von dem Mobilgerät an das Kochfeld übertragen werden. Um dabei jedoch eine Fernwirkung auszuschließen, werden die vom Kochfeld empfangenen Verfahrensanweisungen erst bzw. nur dann vom Kochfeld auch ausgeführt, falls diese vom Benutzer am Kochfeld freigegeben bzw. bestätigt werden.

Somit ist es bei dem Verfahren der EP 3 340 201 A1 erforderlich, dass jede Verfahrensanweisung des Mobilgeräts bzw. dessen App vom Benutzer am Kochfeld bestätigt wird. Dies kann vom Benutzer als sehr umständlich empfunden werden und einen Teil des Komforts, welcher durch die Unterstützung des Kochprozesses seitens des Mobilgeräts bzw. dessen App geboten wird, wieder zunichtemachen.

Nachteilig ist insbesondere, dass die Zuordnung der durch den Benutzer zu bestätigenden Verfahrensanweisung zu den einzelnen Kochstellen des Kochfelds für den Benutzer verwirrend und nicht absolut sicher sowie nicht intuitiv den einzelnen Kochstellen des Kochfelds zuzuordnen sein kann. Dies kann insbesondere dann der Fall sein, falls mehrere Kochstellen des Kochfelds für das zuzubereitende Gericht parallel betrieben werden. Dies kann ebenfalls einen Teil des Komforts, welcher durch die Unterstützung des Kochprozesses seitens des Mobilgeräts bzw. dessen App geboten wird, wieder zunichtemachen. Auch kann dies zu Fehlbedienungen führen, wenn der Benutzer die Kochstelen des Kochfeldes verwechselt und die zu bestätigende Verfahrensanweisung einer falschen Kochstelle zuordnet und bestätigt.

Der Erfindung stellt sich somit das Problem, ein Verfahren zum Betrieb eines Kochsystems der eingangs beschrieben Art bereitzustellen, so dass der Komfort der Unterstützung eines Kochprozesses durch ein Mobilgerät erhöht werden kann. Dabei soll eine Fernwirkung ausgeschlossen werden können und/oder eine Zuordnung von Heizprogramm und Gargeschirr ermöglicht werden. Zumindest soll eine Alternative zu bekannten derartigen Verfahren zum Betrieb eines Kochsystems geschaffen werden.

Erfindungsgemäß wird dieses Problem durch ein Verfahren zum Betrieb eines Kochsystems mit den Merkmalen des Patentanspruchs 1, durch ein Kochfeld mit den Merkmalen des Patentanspruchs 12 sowie durch ein Gargeschirr mit den Merkmalen des Patentanspruchs 13 gelöst. Vorteilhafte Ausgestaltungen und Weiterbildungen der Erfindung ergeben sich aus den nachfolgenden Unteransprüchen.

Somit betrifft die Erfindung ein Verfahren zum Betrieb eines Kochsystems, vorzugsweise eines induktiven Kochsystems, wobei das Kochsystem ein Kochfeld, ein Gargeschirr und ein Mobilgerät aufweist, das Verfahren mit den Schritten:
- Aussenden einer Verfahrensanweisung von dem Mobilgerät an das Kochfeld,
- Empfangen der Verfahrensanweisung des Mobilgeräts seitens des Kochfelds,
- Aussenden einer Bestätigungsanfrage von dem Kochfeld an das Gargeschirr,
- in Reaktion auf ein Bestätigen seitens eines Benutzers am Gargeschirr, Aussenden einer Bestätigungsmeldung von dem Gargeschirr an das Kochfeld, und
- in Reaktion auf ein Empfangen der Bestätigungsmeldung des Gargeschirrs seitens des Kochfelds, Ausführen der Verfahrensanweisung des Mobilgeräts seitens des Kochfelds.

Das Bestätigen seitens eines Benutzers am Gargeschirr kann mittels eines Bestätigungselements in Form eines Bedienelements wie z.B. eines berührungsempfindlichen Tasters oder dergleichen erfolgen. Das Bestätigungselement kann vorzugsweise an einem Griffelement oder dergleichen des Gargeschirrs aber auch unabhängig von einem Griffelement am Gargeschirr angeordnet sein. In jedem Fall kann das Bestätigungselement ausreichend geschützt bzw. abgedichtet ausgebildet sein, um das Gargeschirr abwaschbar und insbesondere spülmaschinentauglich zu machen. Die Energieversorgung des Bestätigungselements kann vorzugsweise über Energy-Harvesting z.B. aus dem Induktionskreis eines Induktionskochfelds erfolgen, aber auch mittels einer Batterie bzw. mittels eines Akkumulators.

Mit anderen Worten kann das bisher bekannte Bestätigen einer Verfahrensanweisung eines Kochrezepts und dergleichen, welches z.B. als App auf einem Mobilgerät wie z.B. einem Smartphone oder einem Tablet abläuft, vom Kochfeld auf das Gargeschirr wie z.B. eine Pfanne, einen Topf, einen Wasserkocher, ein Tauchsieder oder Tauchtarget und dergleichen verlagert werden. Das Mobilgerät kann aber auch eine Projektion oder ein Display eines anderen Einbaugerätes oder dergleichen sein. Hierdurch kann das Bestätigen am Ort des Geschehens beibehalten werden, da dies zur Vermeidung einer Fernwirkung erforderlich ist. Jedoch kann es für einen Benutzer einfacher, eindeutiger und bzw. oder intuitiver zuzuordnen sein, wenn er eine Verfahrensanweisung direkt am entsprechenden Gargeschirr bestätigt als zentral am Kochfeld. Dies kann den Komfort der Unterstützung eines Kochprozesses durch ein Mobilgerät erhöhen und gleichzeitig eine Fernwirkung ausschließen.

Ein Tauchsieder, auch Tauchtarget genannt, ist ein Stab mit an einem ersten Ende ausgebildeten Griffabschnitt und an dem gegenüberliegenden zweiten Ende ausgebildeten Induktor, auch Target genannt. Der Induktor ist eine Metallplatte, welche angeregt von einem elektromagnetischen Wechselfeld induktiv erwärmt werden kann. Der Tauchsieder kann in ein Gefäß, welches zur induktiven Erwärmung nicht geeignet ist, beispielsweise ein Trinkglas oder eine Porzellankanne eingestellt werden. Dabei Taucht das Tauchsieder in das Lebensmittel ein beziehungsweise das Lebensmittel umgibt das Tauchsieder. Wird das Gefäß mit dem Tauchsieder auf einer Kochstelle eines Induktionskochfeldes aufgestellt, kann durch die induktive Erwärmung des Tauchsieders das Lebensmittel erwärmt werden.

Gemäß einem Aspekt der Erfindung erfolgt in Reaktion auf ein Empfangen der Bestätigungsanfrage des Kochfelds seitens des Gargeschirrs ein Auffordern des Benutzers zur Ausführung des Bestätigens seitens des Gargeschirrs. Hierdurch kann der Benutzer darauf aufmerksam gemacht werden, dass eine Bestätigung seinerseits für die Fortführung des Kochprozesses erforderlich ist. Gleichzeitig kann der Benutzer hierdurch direkt erkennen, an welches Gargeschirr das Bestätigen erforderlich ist, da das Bestätigen eben von genau diesem Gargeschirr angefordert wird. Dies kann die Zuordnung des zu bestätigenden Schrittes des Kochprozesses zu dem betroffenen Gargeschirr für den Benutzer einfach, eindeutig und bzw. oder intuitiv gestalten.

Gemäß einem weiteren Aspekt der Erfindung erfolgt das Auffordern des Benutzers zur Ausführung des Bestätigens seitens des Gargeschirrs optisch, akustisch und bzw. oder haptisch. Als optische Mittel kommen insbesondere Beleuchtungsfunktionen am Gargeschirr in Betracht, welche zum Auffordern des Benutzers zur Ausführung des Bestätigens seitens des Gargeschirrs leuchten, blinken, pulsieren, die Farbe verändern und dergleichen können. Als akustische Mittel können vorzugsweise Töne oder Tonfolgen geeignet sein, welche zum Auffordern des Benutzers zur Ausführung des Bestätigens seitens des Gargeschirrs ausgegeben oder verändert werden. Als haptisches Mittel kann vorzugsweise eine Vibration das Gargeschirrs oder eines Teil hiervon wie z.B. der Griff einer Pfanne oder die Henken eines Topfes erfolgen.

Gemäß einem weiteren Aspekt der Erfindung erfolgt in Reaktion auf ein Empfangen der Bestätigungsanfrage des Kochfelds seitens des Gargeschirrs ein Aktivieren eines Bestätigungselements des Gargeschirrs. Auf diese Art und Weise kann das entsprechende Bestätigungselement erst dann aktiviert werden, wenn das Bestätigungselement auch betätigt werden soll. Dies kann fehlerhafte Eingaben seitens des Benutzers zu anderen Zeiten vermeiden. Auch kann Energie gespart werden, indem das Bestätigungselement nicht unnötig früh betrieben wird. Dies kann besonders relevant sein, da dem Gargeschirr üblicherweise Energie von außen zugeführt werden muss, um das erfindungsgemäße Verfahren ausführen zu können.

Gemäß einem weiteren Aspekt der Erfindung erfolgt in Reaktion auf ein erfolgtes Pairing von Kochfeld und Gargeschirr ein Aktivieren eines Bestätigungselements des Gargeschirrs. Alternativ kann das Aktivieren des Bestätigungselements bereits dann erfolgen, sobald ein Pairing zwischen Kochfeld und Gargeschirr hergestellt wurde. Wird in diesem Fall das Bestätigungselement z.B. beleuchtet, so kann dem Benutzer auch das erfolgreiche Pairing von Kochfeld und Gargeschirr auf diese Art und Weise angezeigt werden.

Gemäß einem weiteren Aspekt der Erfindung erfolgt nach Ablauf einer vorbestimmten Zeitdauer
- ein Verändern des Aufforderns des Benutzers zur Ausführung des Bestätigens seitens des Gargeschirrs und bzw. oder
- ein Informieren des Benutzers über den Ablauf der vorbestimmten Zeitdauer seitens des Gargeschirrs und bzw. oder
- ein Beenden des Aufforderns des Benutzers zur Ausführung des Bestätigens seitens des Gargeschirrs.

Mit anderen Worten können nach dem Verstreichen einer vorbestimmten Zeitdauer, welche vom jeweiligen Schritt des Kochprozesses abhängen kann, ohne ein erfolgtes Bestätigen durch den Benutzer am Gargeschirr die Maßnahmen zur Aufforderung verändert werden. Hierdurch kann z.B. ein optisches Mittel wie ein leuchtendes Bestätigungselement zu blinken beginnen bzw. kann die Frequenz und bzw. oder die Intensität eines bereits blinkenden Bestätigungselements erhöht werden. Zusätzlich oder alternativ kann ein akustisches Mittel verändert oder auch erst jetzt zu einem optischen Mittel ergänzt werden. Dies kann ebenso für ein haptisches Mittel gelten. In jedem Fall kann hierdurch versucht werden, die Aufmerksamkeit des Benutzers stärker als bisher zu erregen und ihn auf die zunehmende Dringlichkeit hinzuweisen, ein Bestätigen am Gargeschirr durchzuführen.

Zusätzlich oder alternativ kann der Benutzer z.B. über eine Anzeige und bzw. oder über eine akustische Ausgabe darüber informiert werden, dass bzw. wie viel Zeit bereits vergangen ist, seit dem das Bestätigen durchzuführen ist. Ebenso kann auf eine verbleibende Zeitdauer hingewiesen werden, welche noch zum Bestätigen zur Verfügung steht.

Zusätzlich oder alternativ kann ein Beenden des Aufforderns des Benutzers erfolgen. Dies kann z.B. der Fall sein, falls die aktuell durchzuführende und zu bestätigende Maßnahme am Gargeschirr gemäß des Kochprozesses bzw. gemäß des Kochrezepts aufgrund der verstrichenen Zeitdauer nicht mehr durchzuführen bzw. nicht mehr durchführbar ist. Vorzugsweise werden diese Schritte nach unterschiedlichen vorbestimmten Zeitdauern ausgeführt, so dass z.B. zuerst das Auffordern verändert bzw. intensiviert und erst später das Auffordern beendet werden kann.

Gemäß einem weiteren Aspekt der Erfindung erfolgt in Reaktion auf das Aussenden der Verfahrensanweisung von dem Mobilgerät an das Kochfeld ein Auffordern des Benutzers zur Ausführung des Bestätigens seitens des Mobilgeräts. Mit anderen Worten kann der Benutzer seitens des Mobilgeräts bzw. dessen App ebenfalls darauf hingewiesen werden, dass ein Bestätigen am Gargeschirr durchzuführen ist. Dies kann die Möglichkeiten erhöhen bzw. verbessern, die Aufmerksamkeit des Benutzers zu erregen und das Bestätigen durchzuführen.

Gemäß einem weiteren Aspekt der Erfindung erfolgt das Auffordern des Benutzers zur Ausführung des Bestätigens seitens des Mobilgeräts optisch, akustisch und bzw. oder haptisch erfolgt. Hierdurch können vergleichbare Maßnahmen seitens des Mobilgeräts durchgeführt werden wie zuvor hinsichtlich des Gargeschirrs beschrieben, um die Aufmerksamkeit des Benutzers zu erlangen, welche daher hier nicht wiederholt werden sollen.

Gemäß einem weiteren Aspekt der Erfindung erfolgt nach Ablauf einer vorbestimmten Zeitdauer
- ein Verändern des Aufforderns des Benutzers zur Ausführung des Bestätigens seitens des Mobilgeräts und bzw. oder
- ein Informieren des Benutzers über den Ablauf der vorbestimmten Zeitdauer seitens des Mobilgeräts und bzw. oder
- Beenden des Aufforderns des Benutzers zur Ausführung des Bestätigens seitens des Mobilgeräts.

Hierdurch können vergleichbare Maßnahmen seitens des Mobilgeräts durchgeführt werden wie zuvor hinsichtlich des Gargeschirrs beschrieben, um auf das Ausbleiben des Bestätigens durch den Benutzer über eine vorbestimmte Zeitdauer zu reagieren, welche daher hier nicht wiederholt werden sollen.

Gemäß einem weiteren Aspekt der Erfindung erfolgt in Reaktion auf ein Bestätigen der Verfahrensanweisung des Mobilgeräts seitens des Benutzers am Kochfeld ein Ausführen der Verfahrensanweisung des Mobilgeräts. Mit anderen Worten kann parallel zu dem erfindungsgemäßen Bestätigen am Gargeschirr die bisher bekannte Möglichkeit für den Benutzer, das Bestätigen am Kochfeld durchzuführen, beibehalten und dem Benutzer zusätzlich angeboten werden. Somit kann der Benutzer wählen, ob er das Bestätigen am Kochfeld oder am Gargeschirr durchführen möchte. Dies kann den Komfort der Bedienung für den Benutzer erhöhen.

Gemäß einem weiteren Aspekt der Erfindung erfolgt in Reaktion auf ein Empfangen der Bestätigungsmeldung des Gargeschirrs seitens des Kochfelds oder in Reaktion auf ein Bestätigen der Verfahrensanweisung des Mobilgeräts seitens des Benutzers am Kochfeld ein Aussenden eines Bestätigungshinweises von dem Kochfeld an das Mobilgerät, und es erfolgt in Reaktion auf ein Empfangen des Bestätigungshinweises des Kochfelds seitens des Mobilgeräts ein Ausgeben eines Hinweises des Mobilgeräts an den Benutzer, dass das Bestätigen der Verfahrensanweisung des Mobilgeräts am Gargeschirr oder am Kochfeld erfolgt ist. Auf diese Art und Weise kann der Benutzer seitens des Mobilgeräts darüber informiert werden, dass sein Bestätigen am Gargeschirr bzw. am Kochfeld erfolgt ist. Vorzugsweise kann der Bestätigungshinweis bzw. der hieraus resultierende Hinweis an den Benutzer auch die Information enthalten, ob das Bestätigen des Benutzers am Gargeschirr oder am Kochfeld erfolgt ist. Ggfs. kann ferner in Reaktion auf das Empfangen des Bestätigungshinweises des Kochfelds seitens des Mobilgeräts das Mobilgerät bzw. dessen App in den nächsten Schritt eines Kochprozesses übergehen.

Die Erfindung betrifft auch ein Kochfeld zur Durchführung eines Verfahrens wie zuvor beschrieben. Auf diese Art und Weise kann ein Kochfeld bereitgestellt werden, um die Durchführung des zuvor beschriebenen erfindungsgemäßen Verfahrens mit dessen Eigenschaften und Vorteilen zu ermöglichen.

Die Erfindung betrifft auch ein Gargeschirr zur Durchführung eines Verfahrens wie zuvor beschrieben. Auf diese Art und Weise kann ein Gargeschirr bereitgestellt werden, um die Durchführung des zuvor beschriebenen erfindungsgemäßen Verfahrens mit dessen Eigenschaften und Vorteilen zu ermöglichen.

Ein Ausführungsbeispiel der Erfindung ist in den Zeichnungen rein schematisch dargestellt und wird nachfolgend näher beschrieben. Es zeigt
- Figur 1: eine schematische Darstellung eines Kochsystems zur Durchführung eines erfindungsgemäßen Verfahrens von oben; und
- Figur 2: ein Ablaufdiagramm eines erfindungsgemäßen Verfahrens.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung (nicht dargestellt), welche auch als Höhe bezeichnet werden kann.

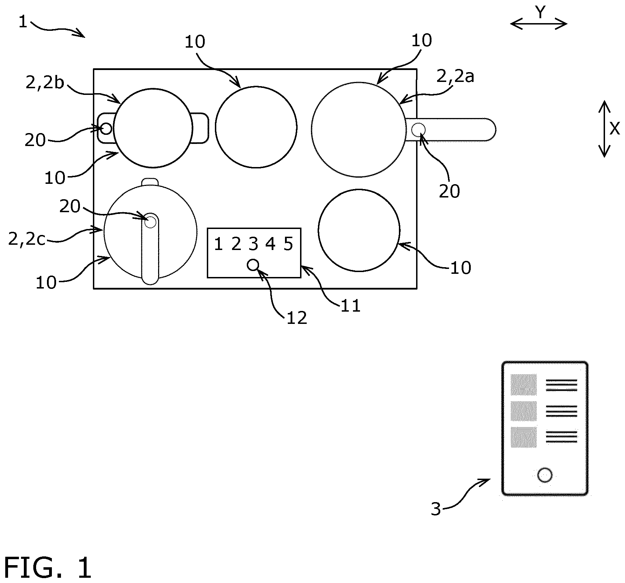

Figur 1 zeigt eine schematische Darstellung eines Kochsystems 1, 2, 3 zur Durchführung eines erfindungsgemäßen Verfahrens von oben. Das Kochsystem 1, 2, 3 besteht aus einem Kochfeld 1, aus einem Gargeschirr 2 sowie aus einem Mobilgerät 3.

Das Kochfeld 1 ist ein induktives Kochfeld 1 und weist insgesamt fünf Kochstellen 10 auf. Ferner ist ein Bedien-/Anzeigeelement 11 vorgesehen, welches ein Bestätigungselement 12 aufweist. Auf drei der fünf Kochstellen 10 sind Gargeschirre 2 angeordnet, zu denen eine Pfanne 2a, ein Kochtopf 2b sowie ein Wasserkocher 2c gehören. Jedes Gargeschirr 2 weist seinerseits ein Bestätigungselement 20 am Griff, Henkel bzw. Deckel auf. Das Mobilgerät 3 kann auch als mobiles Endgerät 3 bezeichnet werden und insbesondere ein Smartphone 3 oder ein Tablet 3 sein, auf welchem eine App zur Durchführung eines Kochprozesses ablaufen kann.

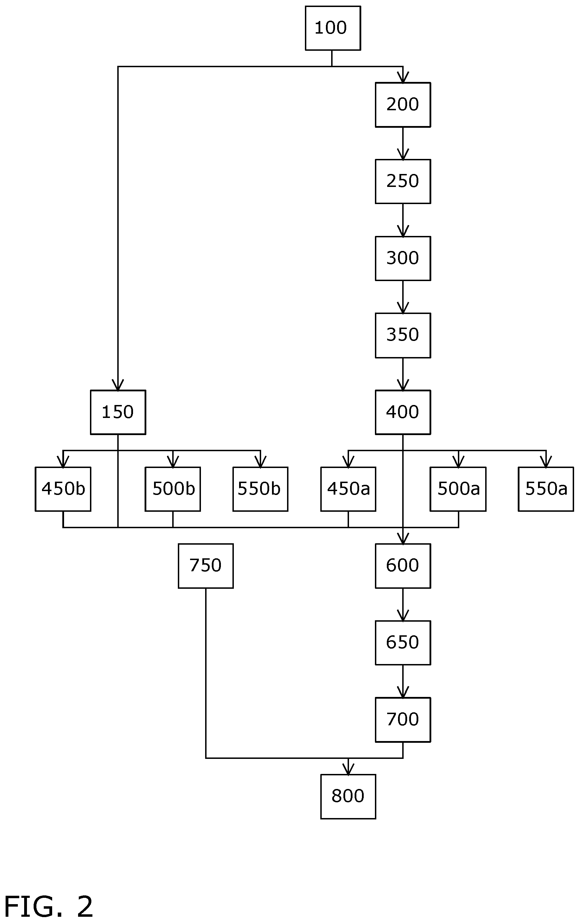

Mit dem Kochsystem 1, 2, 3 kann nun ein erfindungsgemäßes Verfahren wie im Ablaufdiagramm der Figur 2 dargestellt wie folgt ablaufen:
Wird im Ablauf des Kochprozesses der App des Mobilgeräts 3 ein Punkt erreicht, an dem eine Veränderung z.B. der Leistungsstufe der Kochstelle 10 des entsprechenden Gargeschirrs 2 erforderlich ist und vom Kochfeld 1 umgesetzt werden soll, so ist dies, wie bisher bekannt, am Kochfeld 1 durch dessen Bestätigungselement 12 oder alternativ, erfindungsgemäß, am Bestätigungselement 20 des entsprechenden Gargeschirrs 2 zu bestätigen.

Hierzu kann ein Aussenden 100 einer Verfahrensanweisung von dem Mobilgerät 3 an das Kochfeld 1 erfolgen, welches mittels eines Empfangens 200 der Verfahrensanweisung des Mobilgeräts 3 seitens des Kochfelds 1 dort aufgenommen werden kann.

Nun kann seitens des Kochfelds 1 ein Aussenden 250 einer Bestätigungsanfrage an das Gargeschirr 2 erfolgen, welches dort mittels eines Empfangens 300 der Bestätigungsanfrage des Kochfelds 1 seitens des Gargeschirrs 2 aufgenommen werden kann. Hierauf kann ein Aktivieren 350 des Bestätigungselements 20 des Gargeschirrs 2 erfolgen. Dies kann alternativ auch in Reaktion auf ein erfolgtes Pairing von Kochfeld 1 und Gargeschirr 2 bereits erfolgt sein. Ferner kann ein Auffordern 400 des Benutzers zur Ausführung des Bestätigens 600 seitens des Gargeschirrs 2 erfolgen. Hierzu kann beispielsweise das aktivierte Bestätigungselement 20 zu leuchten beginnen.

Nach Ablauf einer vorbestimmten Zeitdauer, ohne dass das Bestätigen 600 vom Benutzer am Gargeschirr 2 ausgeführt wurde, kann ein Verändern 450a des Aufforderns 400 des Benutzers zur Ausführung des Bestätigens 600 seitens des Gargeschirrs 2 erfolgen, indem das Leuchten des Bestätigungselements 20 in ein helleres Leuchten oder in ein Blinken wechselt, um die Aufmerksamkeit des Benutzers besser erlangen zu können. Ggfs. kann auch ein Informieren 500a des Benutzers über den Ablauf der vorbestimmten Zeitdauer seitens des Gargeschirrs 2 erfolgen, z.B. über eine entsprechende Anzeige mit Schrift.

Bleibt das Bestätigen 600 vom Benutzer am Gargeschirr 2 auch nach einer längeren vorbestimmten Zeitdauer aus, so kann ein Beenden 550a des Aufforderns 400 des Benutzers zur Ausführung des Bestätigens 600 seitens des Gargeschirrs 2 erfolgen. Das ausgebliebene Bestätigen 600 kann auch vom Mobilgerät 3 erkannt und hierauf durch einen alternativen Schritt des Kochprozesses reagiert werden.

Parallel kann in Reaktion auf das Aussenden 100 der Verfahrensanweisung von dem Mobilgerät 3 an das Kochfeld 1 ein Auffordern 150 des Benutzers zur Ausführung des Bestätigens 600 seitens des Mobilgeräts 3 erfolgen, um auch auf diese Art und Weise die Aufmerksamkeit des Benutzers für das Bestätigen 600 zu erlangen. Auch seitens des Mobilgeräts 3 bzw. dessen App kann ein Verändern 450b des Aufforderns 150 des Benutzers zur Ausführung des Bestätigens 600 seitens des Mobilgeräts 3, ein Informieren 500b des Benutzers über den Ablauf der vorbestimmten Zeitdauer seitens des Mobilgeräts 3 und bzw. oder ein Beenden 550b des Aufforderns 150 des Benutzers zur Ausführung des Bestätigens 600 seitens des Mobilgeräts 3 erfolgen.

Erfolgt das Bestätigen 600 seitens des Benutzers am Gargeschirr 2, erfolgt ein Aussenden 650 einer Bestätigungsmeldung von dem Gargeschirr 2 an das Kochfeld 1, welche durch ein Empfangen 700 der Bestätigungsmeldung des Gargeschirrs 2 seitens des Kochfelds 1 dort erhalten werden kann. Dies kann zu einem Ausführen 800 der Verfahrensanweisung des Mobilgeräts 3 seitens des Kochfelds 1 führen. Dies kann alternativ weiterhin durch ein Bestätigen 750 der Verfahrensanweisung des Mobilgeräts 2 seitens des Benutzers am Kochfeld 1 mittels dessen Bestätigungselements 12 erfolgen.

In Reaktion auf das Empfangen 700 der Bestätigungsmeldung des Gargeschirrs 2 seitens des Kochfelds 1 oder in Reaktion auf das Bestätigen 750 der Verfahrensanweisung des Mobilgeräts 2 seitens des Benutzers am Kochfeld 1 kann ferner ein Aussenden 850 eines Bestätigungshinweises von dem Kochfeld 1 an das Mobilgerät 3 erfolgen. In Reaktion auf ein Empfangen 900 des Bestätigungshinweises des Kochfelds 1 seitens des Mobilgeräts 3 kann dort ein Ausgeben 950 eines Hinweises des Mobilgeräts 3 an den Benutzer erfolgen, dass das Bestätigen 750 der Verfahrensanweisung des Mobilgeräts 2 am Gargeschirr 2 oder am Kochfeld 1 erfolgt ist. Dies kann ggfs. unterschieden werden.

### Bezugszeichenliste (Bestandteil der Beschreibung)

- X: Längsrichtung; Tiefe; Länge
- Y: Querrichtung; Breite

- 1: (induktives) Kochfeld
- 10: Kochstellen
- 11: Bedien-/Anzeigeelement
- 12: Bestätigungselement

- 2: Gargeschirr
- 2a: Pfanne
- 2b: Kochtopf
- 2c: Wasserkocher
- 20: Bestätigungselemente

- 3: Mobilgerät; mobiles Endgerät; Smartphone; Tablet

- 100: Aussenden Verfahrensanweisung von Mobilgerät 3 an Kochfeld 1
- 150: Auffordern Benutzer zur Ausführung Bestätigen 600 seitens Mobilgerät 3
- 200: Empfangen Verfahrensanweisung des Mobilgeräts 3 seitens Kochfeld 1
- 250: Aussenden Bestätigungsanfrage von Kochfeld 1 an Gargeschirr 2
- 300: Empfangen Bestätigungsanfrage des Kochfelds 1 seitens Gargeschirr 2
- 350: Aktivieren Bestätigungselement 12 des Gargeschirrs 2
- 400: Auffordern Benutzer zur Ausführung des Bestätigens 600 seitens Gargeschirr 2
- 450a: Verändern Auffordern 400 des Benutzers zur Ausführung des Bestätigens 600 seitens Gargeschirrs 2
- 500a: Informieren Benutzer über Ablauf vorbestimmte Zeitdauer seitens Gargeschirr 2
- 550a: Beenden Auffordern 400 des Benutzers zur Ausführung des Bestätigens 600 seitens Gargeschirr 2
- 450b: Verändern Auffordern 150 des Benutzers zur Ausführung des Bestätigens 600 seitens Mobilgerät 3
- 500b: Informieren Benutzer über Ablauf vorbestimmte Zeitdauer seitens Mobilgerät 3
- 550b: Beenden Auffordern 150 des Benutzers zur Ausführung des Bestätigens 600 seitens Mobilgerät 3
- 600: Bestätigen seitens Benutzer am Gargeschirr 2
- 650: Aussenden Bestätigungsmeldung von Gargeschirr 2 an Kochfeld 1
- 700: Empfangen Bestätigungsmeldung des Gargeschirrs 2 seitens Kochfeld 1
- 750: Bestätigen Verfahrensanweisung des Mobilgeräts 2 seitens Benutzer am Kochfeld 1
- 800: Ausführen Verfahrensanweisung des Mobilgeräts 3 seitens Kochfeld 1
- 850: Aussenden Bestätigungshinweis von Kochfeld 1 an Mobilgerät 3
- 900: Empfangen Bestätigungshinweis des Kochfelds 1 seitens Mobilgerät 3
- 950: Ausgeben Hinweis des Mobilgeräts 3 an Benutzer

## Patentansprüche

1. Verfahren zum Betrieb eines Kochsystems (1, 2, 3), wobei das Kochsystem (1, 2, 3) ein Kochfeld (1), ein Gargeschirr (2) und ein Mobilgerät (3) aufweist, das Verfahren mit den Schritten:
Aussenden (100) einer Verfahrensanweisung von dem Mobilgerät (3) an das Kochfeld (1),
Empfangen (200) der Verfahrensanweisung des Mobilgeräts (3) seitens des Kochfelds (1),
**gekennzeichnet durch** die Schritte:
Aussenden (250) einer Bestätigungsanfrage von dem Kochfeld (1) an das Gargeschirr (2),
in Reaktion auf ein Bestätigen (600) seitens eines Benutzers am Gargeschirr (2), Aussenden (650) einer Bestätigungsmeldung von dem Gargeschirr (2) an das Kochfeld (1), und
in Reaktion auf ein Empfangen (700) der Bestätigungsmeldung des Gargeschirrs (2) seitens des Kochfelds (1), Ausführen (800) der Verfahrensanweisung des Mobilgeräts (3) seitens des Kochfelds (1).

2. Verfahren nach Anspruch 1, **gekennzeichnet durch** den weiteren Schritt:
in Reaktion auf ein Empfangen (300) der Bestätigungsanfrage des Kochfelds (1) seitens des Gargeschirrs (2), Auffordern (400) des Benutzers zur Ausführung des Bestätigens (600) seitens des Gargeschirrs (2).

3. Verfahren nach Anspruch 2, **dadurch gekennzeichnet, dass**
das Auffordern (400) des Benutzers zur Ausführung des Bestätigens (600) seitens des Gargeschirrs (2) optisch, akustisch und/oder haptisch erfolgt.

4. Verfahren nach einem der vorangehenden Ansprüche, **gekennzeichnet durch** den weiteren Schritt:
in Reaktion auf ein Empfangen (300) der Bestätigungsanfrage des Kochfelds (1) seitens des Gargeschirrs (2), Aktivieren (350) eines Bestätigungselements (20) des Gargeschirrs (2).

5. Verfahren nach einem der Ansprüche 1 bis 3, **gekennzeichnet durch** den weiteren Schritt:
in Reaktion auf ein erfolgtes Pairing von Kochfeld (1) und Gargeschirr (2),
Aktivieren (350) eines Bestätigungselements (12) des Gargeschirrs (2).

6. Verfahren nach einem der vorangehenden Ansprüche, **gekennzeichnet durch** die weiteren Schritte:
nach Ablauf einer vorbestimmten Zeitdauer,
Verändern (450a) des Aufforderns (400) des Benutzers zur Ausführung des Bestätigens (600) seitens des Gargeschirrs (2) und/oder
Informieren (500a) des Benutzers über den Ablauf der vorbestimmten Zeitdauer seitens des Gargeschirrs (2) und/oder
Beenden (550a) des Aufforderns (400) des Benutzers zur Ausführung des Bestätigens (600) seitens des Gargeschirrs (2).

7. Verfahren nach einem der vorangehenden Ansprüche, **gekennzeichnet durch** den weiteren Schritt:
in Reaktion auf das Aussenden (100) der Verfahrensanweisung von dem Mobilgerät (3) an das Kochfeld (1), Auffordern (150) des Benutzers zur Ausführung des Bestätigens (600) seitens des Mobilgeräts (3).

8. Verfahren nach Anspruch 7, **dadurch gekennzeichnet, dass**
das Auffordern (150) des Benutzers zur Ausführung des Bestätigens (600) seitens des Mobilgeräts (3) optisch, akustisch und/oder haptisch erfolgt.

9. Verfahren nach Anspruch 7 oder 8, **gekennzeichnet durch** den weiteren Schritt:
nach Ablauf einer vorbestimmten Zeitdauer,
Verändern (450b) des Aufforderns (150) des Benutzers zur Ausführung des Bestätigens (600) seitens des Mobilgeräts (3) und/oder
Informieren (500b) des Benutzers über den Ablauf der vorbestimmten Zeitdauer seitens des Mobilgeräts (3) und/oder
Beenden (550b) des Aufforderns (150) des Benutzers zur Ausführung des Bestätigens (600) seitens des Mobilgeräts (3).

10. Verfahren nach einem der vorangehenden Ansprüche, **gekennzeichnet durch** den weiteren Schritt:
in Reaktion auf ein Bestätigen (750) der Verfahrensanweisung des Mobilgeräts (2) seitens des Benutzers am Kochfeld (1), Ausführen (800) der Verfahrensanweisung des Mobilgeräts (3).

11. Verfahren nach einem der vorangehenden Ansprüche, **gekennzeichnet durch** den weiteren Schritt:
in Reaktion auf ein Empfangen (700) der Bestätigungsmeldung des Gargeschirrs (2) seitens des Kochfelds (1) oder in Reaktion auf ein Bestätigen (750) der Verfahrensanweisung des Mobilgeräts (2) seitens des Benutzers am Kochfeld (1), Aussenden (850) eines Bestätigungshinweises von dem Kochfeld (1) an das Mobilgerät (3), und
in Reaktion auf ein Empfangen (900) des Bestätigungshinweises des Kochfelds (1) seitens des Mobilgeräts (3), Ausgeben (950) eines Hinweises des Mobilgeräts (3) an den Benutzer, dass das Bestätigen (750) der Verfahrensanweisung des Mobilgeräts (2) am Gargeschirr (2) oder am Kochfeld (1) erfolgt ist.

12. Kochfeld (1) zur Durchführung eines Verfahrens nach einem der Ansprüche 1 bis 11.

13. Gargeschirr (2) zur Durchführung eines Verfahrens nach einem der Ansprüche 1 bis 11.

## Claims

1. Method for operating a cooking system (1, 2, 3), wherein the cooking system (1, 2, 3) has a hob (1), cookware (2) and a mobile device (3), the method comprising the steps of:
transmitting (100) a process instruction from the mobile device (3) to the hob (1),
receiving (200) the process instruction from the mobile device (3) by means of the hob (1),
**characterised by** the steps:
transmitting (250) a confirmation request from the hob (1) to the cookware (2),
in response to a confirmation (600) by a user on the cookware (2), transmitting (650) a confirmation message from the cookware (2) to the hob (1), and
in response to the hob (1) receiving (700) the confirmation message from the cookware (2), executing (800) the process instruction of the mobile device (3) by means of the hob (1).

2. Method according to claim 1, **characterised by** the further step of:
in response to the cookware (2) receiving (300) the confirmation request from the hob (1), prompting (400) the user by means of the cookware (2) to carry out the confirmation (600).

3. Method according to claim 2, **characterised in that**
the cookware (2) prompts (400) the user to carry out the confirmation (600) optically, acoustically and/or haptically.

4. Method according to any of the preceding claims, **characterised by** the further step of:
in response to the cookware (2) receiving (300) the confirmation request from the hob (1), activating (350) a confirmation element (20) of the cookware (2).

5. Method according to any of claims 1 to 3, **characterised by** the further step of:
in response to a successful pairing of the hob (1) and the cookware (2), activating (350) a confirmation element (12) of the cookware (2).

6. Method according to any of the preceding claims, **characterised by** the further steps of:
after a predetermined period of time has expired,
changing (450a) the prompting (400) of the user by the cookware (2) to carry out the confirmation (600) and/or
informing (500a) the user about the expiry of the predetermined period of time by means of the cookware (2) and/or
ending (550a) the prompting (400) of the user by the cookware (2) to carry out the confirmation (600).

7. Method according to any of the preceding claims, **characterised by** the further step of:
in response to the transmission (100) of the process instruction from the mobile device (3) to the hob (1), prompting (150) the user by means of the mobile device (3) to carry out the confirmation (600).

8. Method according to claim 7, **characterised in that**
the mobile device (3) prompts (150) the user to carry out the confirmation (600) optically, acoustically and/or haptically.

9. Method according to either claim 7 or claim 8, **characterised by** the further step of:
after a predetermined period of time has expired,
changing (450b) the prompting (150) of the user by the mobile device (3) to carry out the confirmation (600) and/or
informing (500b) the user about the expiry of the predetermined period of time by means of the mobile device (3) and/or
ending (550b) the prompting (150) of the user by the mobile device (3) to carry out the confirmation (600).

10. Method according to any of the preceding claims, **characterised by** the further step of:
in response to the user confirming (750) the process instruction of the mobile device (2) on the hob (1), executing (800) the process instruction of the mobile device (3).

11. Method according to any of the preceding claims, **characterised by** the further step of:
in response to the hob (1) receiving (700) the confirmation message from the cookware (2) or in response to the user confirming (750) the process instruction of the mobile device (2) on the hob (1), transmitting (850) a confirmation notification from the hob (1) to the mobile device (3), and
in response to the mobile device (3) receiving (900) the confirmation notification from the hob (1), outputting (950) a notification from the mobile device (3) to the user that the process instruction of the mobile device (2) has been confirmed (750) on the cookware (2) or on the hob (1).

12. Hob (1) for carrying out a method according to any of claims 1 to 11.

13. Cookware (2) for carrying out a method according to any of claims 1 to 11.

## Revendications

1. Procédé permettant de faire fonctionner un système de cuisson (1, 2, 3), le système de cuisson (1, 2, 3) comprenant une plaque de cuisson (1), un ustensile de cuisine (2) et un appareil mobile (3), le procédé comportant les étapes suivantes :
envoi (100) d'une instruction de procédé depuis l'appareil mobile (3) à la plaque de cuisson (1),
réception (200) de l'instruction de procédé de l'appareil mobile (3) du côté de la plaque de cuisson (1),
**caractérisé par** les étapes suivantes :
envoi (250) d'une demande de confirmation depuis la plaque de cuisson (1) à l'ustensile de cuisine (2),
en réponse à une confirmation (600) du côté d'un utilisateur au niveau de l'ustensile de cuisine (2), envoi (650) d'un message de confirmation depuis l'ustensile de cuisine (2) à la plaque de cuisson (1), et
en réponse à une réception (700) du message de confirmation de l'ustensile de cuisine (2) du côté de la plaque de cuisson (1), exécution (800) de l'instruction de procédé de l'appareil mobile (3) du côté de la plaque de cuisson (1).

2. Procédé selon la revendication 1, **caractérisé par** l'étape supplémentaire suivante :
en réponse à une réception (300) de la demande de confirmation de la plaque de cuisson (1) du côté de l'ustensile de cuisine (2), incitation (400) de l'utilisateur à réaliser la confirmation (600) du côté de l'ustensile de cuisine (2).

3. Procédé selon la revendication 2, **caractérisé en ce que**
l'incitation (400) de l'utilisateur à réaliser la confirmation (600) du côté de l'ustensile de cuisine (2) est effectuée de manière optique, acoustique et/ou haptique.

4. Procédé selon l'une des revendications précédentes, **caractérisé par** l'étape supplémentaire suivante :
en réponse à une réception (300) de la demande de confirmation de la plaque de cuisson (1) du côté de l'ustensile de cuisine (2), activation (350) d'un élément de confirmation (20) de l'ustensile de cuisine (2).

5. Procédé selon l'une des revendications 1 à 3, **caractérisé par** l'étape supplémentaire suivante :
en réponse à un couplage effectué de la plaque de cuisson (1) et de l'ustensile de cuisine (2), activation (350) d'un élément de confirmation (12) de l'ustensile de cuisine (2).

6. Procédé selon l'une des revendications précédentes, **caractérisé par** l'étape supplémentaire suivante :
après l'expiration d'une durée prédéterminée,
modification (450a) de l'incitation (400) de l'utilisateur à réaliser la confirmation (600) du côté de l'ustensile de cuisine (2) et/ou
information (500a) de l'utilisateur de l'expiration de la durée prédéterminée du côté de l'ustensile de cuisine (2) et/ou
interruption (550a) de l'incitation (400) de l'utilisateur à réaliser la confirmation (600) du côté de l'ustensile de cuisine (2).

7. Procédé selon l'une des revendications précédentes, **caractérisé par** l'étape supplémentaire suivante :
en réponse à l'envoi (100) de l'instruction de procédé depuis l'appareil mobile (3) à la plaque de cuisson (1), incitation (150) de l'utilisateur à réaliser la confirmation (600) du côté de l'appareil mobile (3).

8. Procédé selon la revendication 7, **caractérisé en ce que**
l'incitation (150) de l'utilisateur à réaliser la confirmation (600) du côté de l'appareil mobile (3) est effectuée de manière optique, acoustique et/ou haptique.

9. Procédé selon la revendication 7 ou 8, **caractérisé par** l'étape supplémentaire suivante :
après l'expiration d'une durée prédéterminée,
modification (450b) de l'incitation (150) de l'utilisateur à réaliser la confirmation (600) du côté de l'appareil mobile (3) et/ou
information (500b) de l'utilisateur de l'expiration de la durée prédéterminée du côté de l'appareil mobile (3) et/ou
interruption (550b) de l'incitation (150) de l'utilisateur à réaliser la confirmation (600) du côté de l'appareil mobile (3).

10. Procédé selon l'une des revendications précédentes, **caractérisé par** l'étape supplémentaire suivante :
en réponse à une confirmation (750) de l'instruction de procédé de l'appareil mobile (2) du côté de l'utilisateur au niveau de la plaque de cuisson (1), réalisation (800) de l'instruction de procédé de l'appareil mobile (3).

11. Procédé selon l'une des revendications précédentes, **caractérisé par** l'étape supplémentaire suivante :
en réponse à une réception (700) du message de confirmation de l'ustensile de cuisine (2) du côté de la plaque de cuisson (1) ou en réponse à une confirmation (750) de l'instruction de procédé de l'appareil mobile (2) du côté de l'utilisateur au niveau de la plaque de cuisson (1), envoi (850) d'une indication de confirmation depuis la plaque de cuisson (1) à l'appareil mobile (3), et
en réponse à une réception (900) de l'indication de confirmation de la plaque de cuisson (1) du côté de l'appareil mobile (3), transmission (950), à l'utilisateur, d'une indication de l'appareil mobile (3) selon laquelle la confirmation (750) de l'instruction de procédé de l'appareil mobile (2) est effectuée au niveau de l'ustensile de cuisine (2) ou au niveau de la plaque de cuisson (1).

12. Plaque de cuisson (1) pour la mise en oeuvre d'un procédé selon l'une des revendications 1 à 11.

13. Ustensile de cuisine (2) pour la mise en oeuvre d'un procédé selon l'une des revendications 1 à 11.
